# FASCICULE DE BREVET EUROPEEN

(11) **EP 3 155 771 B1**
(45) Date de publication et mention de la délivrance du brevet: **27.11.2019**
(21) Numéro de dépôt: 15731640.7
(22) Date de dépôt: 21.05.2015
(51) Int. Cl.: H04L 12/721, H04L 12/751, H04L 12/741, H04L 12/935

(54) **MÉTHODE DE ROUTAGE DE DONNÉE ET COMMUTATEUR DANS UN RÉSEAU**
DATENSTRECKENPLANUNG UND VERMITTLER IN EINEM NETZWERK
DATA ROUTING METHOD AND SWITCH FOR NETWORK

(30) Priorité: 16.06.2014 FR 1455509
(43) Date de publication de la demande: 19.04.2017
(73) Titulaire: Bull S.A.S., 78340 Les Clayes-sous-Bois (FR)
(72) Inventeur: VIGNERAS, Pierre, 91470 Angervilliers (FR); QUINTIN, Jean-Noël, 92340 Bourg la Reine (FR)
(74) Mandataire: Novagraaf Technologies
(86) Numéro de dépôt international: PCT/FR2015/051344
(87) Numéro de publication internationale: WO 2015/193570

(56) Documents cités:
- US-A1- 2011 007 741
- "The Network Layer ED - Tanenbaum A S; Wetherall D J", 1 janvier 2011 (2011-01-01), COMPUTER NETWORKS, PEARSON, BOSTON, MASS., USA, PAGE(S) 373-382, XP007923028, ISBN: 978-0-13-255317-9 page 376, ligne 1 - page 377, ligne 27 page 382, ligne 1 - ligne 14 Section 5.6.2 - p.464, l. 30
- "Load Splitting ED - Perlman R", 1 janvier 2000 (2000-01-01), INTERCONNECTIONS: BRIDGES, ROUTERS, SWITCHES AND INTERNETWORKING PROTOCOLS, ADDISON WESLEY LONGMAN, US, PAGE(S) 325 - 336, XP007923029, ISBN: 0-201-63448-1 le document en entier

## Description

L'invention a trait au domaine du routage au travers d'un réseau. Plus particulièrement, l'invention concerne la gestion des tables permettant le routage de flux d'informations au travers d'un réseau d'un supercalculateur.

Apparus dans les années soixante, l'évolution progressive des supercalculateurs dits HPC (acronyme anglais de « *High performance computing* »), permet d'années en années de fournir des puissances de calculs et des capacités de traitement de données toujours plus importantes. Ces supercalculateurs sont couramment employés pour modéliser et simuler des phénomènes complexes ne pouvant être réalisés par approche expérimentale. Les supercalculateurs sont donc employés pour des applications très variées telles que simulations météorologiques, modélisations financières, analyses probabilistes, simulations aéronautiques, médicales, physiques, moléculaires ou encore nucléaires.

Un supercalculateur est typiquement réalisé par un réseau de noeuds interconnectés par des commutateurs (« *switchs* » en anglais). Un nœud peut, à titre d'exemple, être un ordinateur, un serveur ou tout autre terminal informatique comprenant une pluralité de microprocesseurs, ainsi que des moyens d'émissions/réceptions de données. Avantageusement, ces noeuds permettent de recevoir ou émettre des données (ex : messages, paquets, datagramme) via l'intermédiaire d'un ou plusieurs périphériques réseaux, par exemple à l'aide d'une carte réseau. Les commutateurs ont quant à eux pour fonction de router les données en provenance ou à destination, des noeuds auxquels ils sont connectés. Avantageusement, les noeuds et commutateurs sont constitutifs d'un réseau informatique ou d'un graphe selon une topologie prédéterminée.

Actuellement, dans le cadre des supercalculateurs, il existe peu de réseaux utilisant un routage adaptatif. Couramment, pour réaliser un routage adaptatif, chaque commutateur conserve dans une table de routage, des informations concernant les différentes possibilités pour que tout paquet puisse atteindre toute destination possible.

La réalisation d'une table de routage résulte couramment d'un logiciel en charge de calculer l'ensemble des chemins possibles d'un paquet vers une destination. A titre d'exemple, on implémente couramment l'algorithme de Dijkstra pour calculer l'ensemble des chemins les plus courts dans un graphe. Généralement, en vue d'éviter de recalculer les chemins à chaque modification d'un algorithme de calcul, l'ensemble des chemins possibles pour l'ensemble des noeuds du graphe sont préenregistrés, dans l'espace mémoire des commutateurs. Il en résulte des tables de routages très volumineuses pour des graphes à complexités limitées. Les topologies de graphes ou réseaux relatives aux supercalculateurs présentent une complexité importante, du fait du nombre élevé de noeuds et de commutateurs interconnectés. Le nombre de possibilités de destinataires et de possibilités de chemins étant limités par l'espace mémoire disponible dans chaque commutateur, une telle solution s'avère limitée car elle ne permet pas de couvrir l'ensemble des possibilités de routages.

D'autres propositions connues consistent à considérer des solutions de routages hiérarchiques. Dans le cadre de ces solutions, on route non plus vers une unique destination, mais vers un sous-ensemble formé d'une pluralité de destinations. Il est ainsi possible de choisir un groupe comprenant un nombre restreint de destinations. Cependant, de telles propositions restent aussi limitées. Il est en effet impossible de déterminer l'ensemble des possibilités de chemins vers une destination, du fait de la limitation dans un commutateur de l'espace mémoire nécessaire au stockage des calculs, ainsi que du temps de calcul nécessaire pour déterminer ces informations. US20110007741 A1 divulgue un routage dans un réseau de commutateurs.

Un premier objectif est de remédier aux inconvénients précités.

Un deuxième objectif est de proposer des tables de routages permettant de couvrir l'ensemble des routes possibles vers une destination donnée.

Un troisième objectif est de proposer une solution de routage adaptatif, permettant de s'affranchir des contraintes de temps de calculs et des limitations d'espace mémoire de calculs dans un commutateur.

Un quatrième objectif est de limiter le volume mémoire occupé par les tables de routages dans les commutateurs d'un réseau ou d'un graphe.

A cet effet, la revendication 1 propose, selon un premier aspect, une méthode de routage de donnée dans un réseau.

Avantageusement, dans cette méthode, pour une pluralité de routes possibles vers un commutateur interfacé avec au moins un nœud, la sélection du port de sortie est réalisée en fonction des informations agrégées, ces informations comprenant le nombre de sauts, la congestion ou la pondération des liens ou noeuds sur la route permettant d'atteindre le commutateur via un port déterminé.

La revendication 3 propose, selon un deuxième aspect, un produit programme d'ordinateur implémenté sur un support mémoire.

La revendication 4 propose, selon un troisième aspect, un commutateur.

Avantageusement, ce commutateur comprend des moyens aptes à sélectionner pour une pluralité de routes possibles vers un commutateur interfacé avec au moins un nœud, un port de sortie en fonction des informations agrégées, ces informations comprenant pour un port déterminé le nombre de sauts, la congestion ou la pondération des liens ou noeuds sur la route permettant d'atteindre le commutateur interfacé avec au moins un nœud.

La revendication 6 propose, selon un quatrième aspect, une topologie d'un supercalculateur, comprenant une pluralité de commutateurs et une pluralité de nœuds, les commutateurs étant réalisés de la manière résumée ci-dessus.

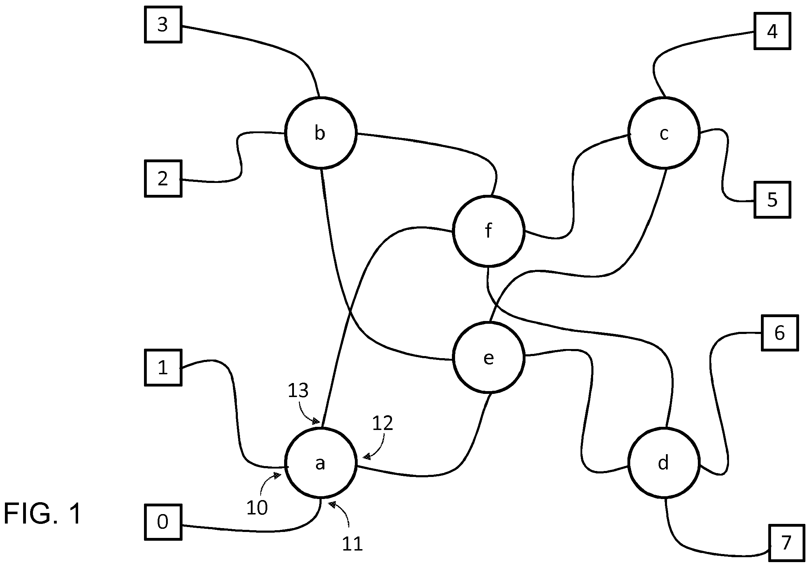

D'autres objets et avantages de l'invention apparaîtront à la lumière de la description d'un mode de réalisation, faite ci-après en référence aux dessins annexés dans lesquels la figure 1 est un exemple de topologie simplifiée d'un réseau ou d'un graphe, comprenant une pluralité de nœuds et une pluralité de commutateurs.

Selon divers modes de réalisations, on considère un réseau ou un graphe comprenant une pluralité de nœuds et de commutateurs disposés selon une topologie prédéterminée. Avantageusement, ce réseau ou graphe se rapporte à la topologie d'un supercalculateur, ou à tout autre réseau ou graphe présentant une topologie similaire.

Un nœud peut, à titre d'exemple, être un terminal informatique, comprenant des moyens d'émissions et réceptions de données, tel une ou plusieurs cartes réseaux, ainsi que des moyens de traitements de données, par exemple une pluralité de microprocesseurs. Avantageusement, les noeuds permettent :
- d'exécuter des instructions réceptionnées via une interface, par exemple conduire une succession de calculs. On parle alors de noeuds de calculs ;
- gérer les entrées/sorties de systèmes de stockages de données. On parle alors de noeuds de service, d'administration ou de stockage.

Les commutateurs comprennent quant à eux une pluralité de ports d'entrées et sorties, et peuvent
- être interfacés directement avec d'autres commutateurs. On entend ici, par « interfacé directement », le fait que deux entités, ici des commutateurs, comprenant chacune au moins une interface (ex : port d'entrée/sortie), soient raccordées par une liaison disposée entre chacune de ces interfaces, par exemple, un lien physique ou virtuel ;
- interconnecter différents noeuds du réseau ou du graphe, et assurer le routage/la commutation des données en provenance ou à destination des différents noeuds. On désigne par la suite ces commutateurs sous l'appellation commutateurs feuille.

La figure 1 illustre un exemple très simplifié d'une topologie de réseau ou de graphe, comprenant une pluralité de noeuds **0, 1, 2, 3, 4, 5, 6, 7** et une pluralité de commutateurs **a, b, c, d, e, f.** Dans cet exemple :
- les noeuds **0** et **1** sont interfacés avec le commutateur **a** ;
- les noeuds **2** et **3** sont interfacés avec le commutateur **b** ;
- les noeuds **4** et **5** sont interfacés avec le commutateur **c** ;
- les noeuds **6** et **7** sont interfacés avec le commutateur **d** ;
- le commutateur **e** est interfacé avec les commutateurs **a, b, c, d** ;
- le commutateur **f** est interfacé avec les commutateurs **a, b, c, d** ;
- seuls les commutateurs **a, b, c, d** sont des commutateurs feuille.

On considère par la suite un réseau ou un graphe, modélisant par exemple la topologie d'un supercalculateur, comprenant un premier nœud connecté à un premier commutateur et un deuxième nœud connecté à un deuxième commutateur.

Typiquement, lorsqu'un premier commutateur reçoit par un port d'entrée un datagramme (ou tout autre donnée) en provenance d'un premier nœud et à destination d'un deuxième nœud, le premier commutateur vérifie sa table de routage. Si le deuxième nœud est interfacé directement via un port de sortie avec le premier commutateur, par exemple via une liaison filaire, le premier commutateur lui transmet le paquet. Dans le cas contraire, ledit deuxième nœud est interfacé avec un autre commutateur, c'est-à-dire un deuxième commutateur. Le premier commutateur cherche alors à identifier une route vers le deuxième nœud de destination. La table de routage du commutateur permet alors d'effectuer un routage adaptatif via la sélection d'un port de sortie adéquat. On entend ici par routage adaptatif, le choix d'un chemin parmi une pluralité afin d'atteindre la destination qui prend en compte l'état du réseau, par exemple sa congestion.

Pour ce faire, la table de routage du commutateur est couramment formée d'une pluralité d'entrées, chaque entrée pouvant comporter une ou plusieurs routes vers un nœud de destination. Une entrée comprend donc des informations relatives à un ou plusieurs ports de sorties pouvant être sélectionnés.

Le choix du port de sortie, et donc du routage, est couramment déterminé en fonction de diverses caractéristiques, à titre d'exemples : congestion des nœuds ou des liens (ex : câbles) dans le réseau, nombre de sauts nécessaires pour atteindre le nœud de destination (« *hop-count* » en anglais), pondérations attribuées aux différents nœuds ou commutateurs intermédiaires. Avantageusement, l'ensemble de ces caractéristiques sont stockées dans la table de routage préenregistrée pour chacun des commutateurs.

A titre d'exemple, considérons pour la figure 1 le commutateur **a.** Dans cet exemple, ce commutateur comprend quatre ports **10, 11, 12, 13** utilisables comme ports d'entrées ou de sorties, selon le sens de circulation des données dans le réseau. Dans l'état de l'art courant, une représentation très simplifiée de la table de routage de ce commutateur se présente sous la forme suivante :

| **Nœud de destination** | **Numéro(s) de port(s) de sortie(s) associé(s)** |
|---|---|
| 0 | 11 |
| 1 | 10 |
| 2 | 12 ; 13 |
| 3 | 12 ; 13 |
| 4 | 12 ; 13 |
| 5 | 12 ; 13 |
| 6 | 12 ; 13 |
| 7 | 12 ; 13 |

Chaque numéro de port de cet exemple est par ailleurs associé à des informations (non-représentées) relatives à la route pour atteindre la destination, par exemple le nombre de sauts nécessaires, ou tout autre caractéristique précédemment citée. Ainsi, lorsqu'un commutateur reçoit un datagramme pour une destination donnée, il effectue à l'aide de sa table de routage une correspondance entre la destination et un numéro de port, ce numéro de port pouvant être choisi en fonction des caractéristiques de la route jusqu'au nœud de destination.

La structure de ce type de table présente néanmoins de nombreux inconvénients, notamment en termes d'espace mémoire occupé dans chaque commutateur et de possibilités de routes. Par exemple, en considérant que cette table de routage comporte huit entrées et deux ports enregistrables au maximum par entrée, on constate que le commutateur e de la figure 1, avec une telle structure de table est dans l'impossibilité de couvrir l'ensemble des combinaisons possibles de routes vers une destination. En effet, même si le commutateur **d** propose un chemin plus court en termes de topologie vers une destination, des routes passant par les commutateurs **a, b, c** sont aussi valides.

Par conséquent, afin de couvrir tout l'ensemble des possibilités de routage vers un nœud de destination, selon divers modes de réalisations, on réalise chaque entrée de la table de routage d'un commutateur de manière à pouvoir atteindre un commutateur feuille rattaché à un groupe de destinations, c'est-à-dire une pluralité de nœuds. Pour ce faire, on agrège pour chaque entrée de la table de routage, l'ensemble des informations permettant d'atteindre un même commutateur rattaché à un groupe de destinations. Par exemple, on agrège pour une même entrée, les numéros (ou tout autre information d'identification) de ports identifiés comme disponibles/utilisables pour le routage vers un commutateur feuille directement interfacé à une destination identifiée, ainsi que les caractéristiques des chemins pour atteindre ce commutateur feuille. Une représentation très simplifiée d'une telle table de routage, pour le commutateur a de la figure 1 dans est donnée ci-dessous :

| **Identification du commutateur feuille de destination** | **Numéro(s) de port(s) de sortie(s) associé(s)** |
|---|---|
| a | champs vide |
| b | 12 ; 13 |
| c | 12 ; 13 |
| d | 12 ; 13 |

Avantageusement, l'identification d'un commutateur feuille vers lequel router un datagramme est établie par chaque commutateur. Par exemple, chaque commutateur détermine une information relative à la destination du datagramme reçu, telle l'adresse de destination du datagramme (et potentiellement l'adresse du commutateur feuille en sus), et en fonction de cette information identifie le commutateur feuille de destination. Cette translation peut-être réalisé au travers d'une table ou d'un calcul sur l'adresse de destination. Par exemple, le commutateur identifie l'adresse du commutateur feuille vers lequel router le datagramme, via une étape de comparaison entre la destination du datagramme et une liste de commutateurs feuille connus, qui sont par exemple préenregistrés ou pré-identifiés dans une table de donnée. Selon un autre exemple, en supposant que chaque commutateur feuille soit numéroté et interfacé directement avec n noeuds, une division par n de l'identifiant (ex : adresse) d'un nœud de destination permet d'identifier le numéro de commutateur feuille. Par exemple, pour 2 commutateurs feuilles « 0 » et « 1 » chacun interfacés avec 8 noeuds, ayant pour identifiants respectifs « 0-7 » et « 8-15 », l'identification du numéro de commutateur est déterminé en divisant par 8 l'identifiant d'un nœud puis en prenant la partie entière de ce résultat.

En outre, chaque entrée de la table comprend pour chaque numéro de port, des caractéristiques agrégées relatives au chemin permettant d'atteindre le commutateur feuille via ledit numéro de port. A titre d'exemples : le nombre de sauts jusqu'à un commutateur feuille de destination, la disponibilité des liens physiques sur la route ou la congestion de noeuds intermédiaires. Avantageusement, ces caractéristiques permettent au commutateur d'effectuer un routage adaptatif via la sélection d'un port de sortie proposant une route avec des caractéristiques réseaux optimales. Ces caractéristiques peuvent à titre d'exemple être choisies lors du déploiement réseau, déterminées lors d'une première phase d'exploration à l'aide d'un algorithme ou encore évaluées périodiquement dans le réseau, par exemple via des mesures ou des algorithmes dynamiques de routage fournissant des retours d'informations concernant les caractéristiques du réseau.

Ainsi, chaque entrée dans la table de routage ne décrit plus une ou plusieurs routes vers un nœud de destination, mais une ou plusieurs routes vers un commutateur feuille de destination, ce commutateur desservant une pluralité de destinations.

Avantageusement, seul le commutateur feuille d'un groupe de destination connaît les caractéristiques (ex : numéro du port de sortie à utiliser) permettant l'acheminement final d'un datagramme vers un nœud spécifique auquel il est directement interfacé. Selon un mode de réalisation, les caractéristiques concernant cet acheminement final sont par exemple initialement connues et préenregistrées dans une table spécifique à chaque commutateur. Une simple correspondance entre la table et la destination du datagramme, permet au commutateur de déterminer le port de sortie vers lequel transférer le datagramme. Une représentation simplifiée d'une telle table spécifique au commutateur **a** de la figure 1 dans est donnée ci-dessous :

| **Nœud de destination** | **Numéro(s) de port(s) de sortie(s) associé(s)** |
|---|---|
| 0 | 11 |
| 1 | 10 |

Selon un autre mode de réalisation, chaque commutateur est configuré de manière à être apte à établir une correspondance entre un port de sortie et un nœud auquel il est rattaché sans nécessairement posséder une telle table. Par exemple, le commutateur est apte à interroger via une requête un nœud sur son identité, tel sur son numéro d'identification, via la liaison physique interconnectant directement un port de sortie et ledit nœud, et établir par la suite une correspondance entre le numéro de port et le nœud identifié.

Ainsi, lorsqu'un premier commutateur reçoit sur un port d'entrée un datagramme à router vers un nœud de destination, il effectue les opérations suivantes :
- il identifie par correspondance, par exemple via une étape de comparaison entre une de ses tables et le champ spécifiant la destination du datagramme, un nœud de destination auquel il est rattaché, ou sinon un deuxième commutateur auquel est rattaché le nœud de destination ;
- si le commutateur est directement interfacé via un port de sortie au nœud de destination, il route le datagramme par ce port vers le nœud de destination ;
- dans le cas contraire, le commutateur identifie un deuxième commutateur feuille connecté au nœud de destination. Il établit alors une correspondance entre une entrée de sa table de routage se rapportant au deuxième commutateur feuille et au moins un port de sortie relatif à cette entrée ;
- si l'entrée concernée comprend une pluralité de ports de sorties, le commutateur détermine alors le meilleur port de sortie en fonction des caractéristiques de chaque port, par exemple en sélectionnant le port qui propose le minimum de sauts à destination du deuxième commutateur feuille ;
- finalement, le commutateur transmet le datagramme sur le meilleur port de sortie identifié.

Par ailleurs, comme il peut être observé dans l'exemple de la table de routage précédent, plusieurs entrées relatives à différents commutateurs cibles, peuvent se rapporter à des mêmes numéros de ports de sortie. Le commutateur conserve donc les informations agrégées pour chacun de ses ports, et lorsqu'il réceptionne un datagramme à retransmettre, est capable de réémettre celui-ci sur chacun de ses ports. Avantageusement, cette caractéristique permet par rapport à l'état de l'art, de ne plus limiter une destination à un nombre fixé de ports : le nombre limite de routes possibles est ici seulement limité par le nombre maximum de ports de sorties de chaque commutateur.

En outre, si l'on souhaite réduire encore d'avantage l'espace mémoire occupé par les tables de routage, il est aussi possible pour un réseau ou graphe comprenant un nombre élevé de commutateurs feuille, d'agréger un ensemble d'informations se rapportant à des routes vers un groupe de commutateurs feuille.

Un premier exemple relatif aux modes de réalisations précédemment décrits est donné ci-dessous.

On considère ici la réalisation matérielle d'un commutateur dans un réseau avec un routage adaptatif : le commutateur choisit pour une destination donnée un port de sortie, parmi les entrées de sa table de routage. Ce commutateur comprend ici 48 ports d'entrées/sorties, et pour chaque destination 3 routes adaptatives.

Dans l'état de l'art, chaque route est définie par 6 bits comprenant l'encodage du numéro de port de sortie. Par conséquent, chaque destination nécessite 3^{∗}6=18 bits dans la table de routage du commutateur.

Choisissons maintenant pour les modes de réalisations précédemment décrits un tableau de 48 bits pour chaque entrée, c'est-à-dire pour chaque commutateur feuille connectant un groupe de destinations.

Dès qu'un groupe contient plus de trois destinations, la quantité de mémoire occupée dans la table de routage se voit diminuée : le gain de mémoire pour chaque entrée est en effet ici de 3^{∗}6^{∗}3/48, soit 9/8 par entrée. Par ailleurs le nombre de possibilités de routage qui était de 3^{∗}3 routes adaptatives dans l'état de l'art passe à un nombre maximum limité par le nombre de ports du commutateur, donc ici 48.

Une topologie d'arbres dit épais (« *fat-trees* » en anglais) couramment employée dans les réseaux de supercalculateurs, se rapporte à la topologie généralisée PGFT (acronyme anglais « *Parallel Port Fat-Trees*»). Dans ces topologies, le nombre de noeuds de calculs connectés à un même commutateur est de la moitié du nombre de liens, soit 24 noeuds de calculs dans cet exemple. On obtient donc pour les noeuds de calculs un gain de mémoire global pour la table de routage qui est ici de 24^{∗}6^{∗}3/24, soit un gain mémoire de facteur 18.

En outre, plus le nombre de noeuds présents sur le calculateur est élevé, plus le gain en mémoire l'est aussi. Avantageusement, les possibilités de routages se voient aussi améliorées : si un ou plusieurs liens de connexions physiques ou commutateurs tombent en panne, il sera en effet possible pour le commutateur directement connecté à la panne de continuer à router les messages sans intervention ou communication extérieure tant qu'il reste un lien utilisable pour atteindre la destination dans sa table.

Dans un deuxième exemple, on considère la mise en œuvre logicielle de commutateurs réalisant un routage de données ou un calcul des plus courts chemins dans un graphe simulant un réseau constitutif d'un supercalculateur.

Typiquement, dans les algorithmes de calculs des plus courts chemins, tel l'algorithme de Dijkstra, chacun des commutateurs d'un graphe est considéré comme un sommet du graphe, et mémorise dans sa « table de routage (généralement appelé table de chemin les plus courts dans le cadre d'un algorithme de calcul des plus courts chemins) » pour chaque destination le voisin proposant le plus court chemin. Ainsi, à partir de chaque commutateur du graphe, le plus court chemin est connu en passant de voisins en voisins, et parmi l'ensemble des voisins plusieurs peuvent mener à la destination avec un même nombre de sauts.

En accord avec les modes de réalisations précédemment décrits, on implémente dans chaque commutateur un algorithme de calcul des plus courts chemins. Avantageusement, dans cet algorithme, au lieu de mémoriser dans la table de routage de chaque commutateur un lien vers les chemins les plus courts, on mémorise, pour chaque port de sortie les caractéristiques du meilleur chemin passant par ce port vers un commutateur feuille connectant un groupe de noeuds de destinations. A titre d'exemple, on mémorise comme caractéristique le nombre de sauts entre le commutateur courant et le commutateur feuille.

Avantageusement, comme un commutateur feuille connecte potentiellement un nombre élevé de noeuds de destinations, un tel algorithme ne requiert pas de mémoire supplémentaire pour la table de routage. Par ailleurs, tout comme dans le premier exemple, si un lien de communication est coupé, le commutateur reste capable de sélectionner un des autres liens fournissant un chemin aussi court.

Avantageusement, une telle implémentation d'algorithme dans un commutateur comprend une complexité en mémoire très limitée. En effet, en notant g le nombre de commutateurs feuilles connectant des groupes de noeuds de destination, a le nombre maximal d'arêtes connectées à un même nœud et n le nombre total de noeuds dans le graphe, on obtient alors une complexité en mémoire de O(g^{∗}n^{∗}a).

L'algorithme d'apprentissage par renforcement relationnel RRL (acronyme anglais de «*Relational Reinforcement Learning*») de Ramalingam & Reps, qui est une variante de l'algorithme de Dijkstra comporte typiquement une complexité en mémoire de O(nq^2^{∗}a). En considérant les modes de réalisations précédemment décrits, cette complexité en mémoire est réduite à O(c^{∗}n^{∗}a) avec c le nombre de noeuds de calculs. Ainsi, si l'on considère à titre d'exemple que chaque commutateur feuille comprend 24 noeuds de calculs, nous obtenons un gain en mémoire de 24. Par ailleurs, la complexité de temps de calcul pour chaque entrée se voit divisée par le nombre de destinations au sein d'un même groupe, c'est-à-dire le nombre de noeuds rattachés à un même commutateur feuille.

Dans cet exemple, les modes de réalisations précédemment proposés sont comparés avec l'algorithme RRL de Ramalingam & Reps, un graphe étant modélisé avec les paramètres suivants :

| | |
|---|---|
| Nombre total de commutateurs | 9792 |
| Nombre de noeuds de calculs | 55296 |
| Nombre de commutateurs feuilles | 2304 |
| Nombre d'arêtes dans le graphe | 200448 |
| Nombre d'arêtes entre commutateurs | 145152 |

Les résultats obtenus pour cette modélisation de graphe, comprenant la construction des tables de correspondances pour chacun des commutateurs, permettent d'obtenir une occupation mémoire d'environ 10Go avec les modes de réalisations proposés, contre environ 1To pour l'algorithme RRL de Ramalingam & Reps. Par observation des valeurs des paramètres précédents proposés, on comprend que ces résultats proviennent du fait qu'il est plus avantageux de travailler sur les commutateurs feuilles plutôt que sur les nœuds de calculs, ces derniers étant bien plus nombreux dans le graphe.

Avantageusement, considérer une table de routage comprenant des entrées relatives à des routes entre un commutateur et des commutateurs feuilles, vis-à-vis d'un routage de type commutateur vers nœuds ou de type routage nœuds à noeuds, comprend de nombreux avantages :
- une simplification de la topologie du point de vue de chaque commutateur, on ne considère en effet plus individuellement chaque destination, mais des groupes de destinations ;
- on s'affranchit des problèmes de congestion de noeuds. En effet, généralement une procédure de routage s'avère inefficace à résoudre les problèmes de congestions de noeuds. Lorsqu'un nœud n'arrive pas à traiter l'ensemble des données qui lui proviennent, l'équilibrage des routes ne résout rien : un routage permet au mieux à réduire le nombre de routes adaptatives à destination du nœud congestionnant ;
- les nœuds son typiquement exponentiellement plus nombreux que les commutateurs et donc statistiquement d'avantage sujets à des pannes. En considérant les modes de réalisations proposés, la disparition ou la réapparition de nœuds dans un réseau ou un graphe, n'implique pas de changements de perception de topologies du point de vue des commutateurs ;
- le nombre de commutateurs étant typiquement en logarithme du nombre de nœuds, et le nombre de commutateurs feuille en logarithme du nombre de commutateurs, la complexité en mémoire ainsi que la complexité en calcul se voient considérablement réduites.

## Revendications

1. Méthode de routage de donnée dans une topologie de supercalculateur comprenant une pluralité de commutateurs (a-f) et une pluralité de nœuds (0-7), cette donnée provenant d'un premier nœud et étant à destination d'un deuxième nœud, cette méthode comprenant les étapes suivantes :
- pré-enregistrement dans chacun des commutateurs de ladite topologie, d'une liste de commutateurs directement interfacés avec un ou plusieurs nœuds ;
- réception de la donnée par un premier commutateur via un port d'entrée ;
- détermination de la destination de ladite donnée par le premier commutateur ;
lorsque le premier commutateur est directement interfacé avec le deuxième nœud via un port de sortie déterminé
- sélection puis routage de la donnée par ledit port de sortie déterminé ; sinon
- identification du commutateur auquel est directement interfacé le deuxième nœud, par comparaison entre la destination de la donnée et la liste de commutateurs préenregistrée ;
- routage de la donnée vers le commutateur identifié via un port de sortie du premier commutateur, de sorte que la donnée puisse être acheminée vers ledit commutateur identifié, la sélection du port de sortie vers le commutateur identifié étant réalisée par une étape de comparaison entre le commutateur identifié et une table de routage du premier commutateur, chaque entrée de cette table comprenant
- une information permettant d'identifier un commutateur interfacé avec au moins un nœud ;
- un ensemble d'informations agrégées décrivant au moins une route par un port déterminé à destination dudit commutateur interfacé avec au moins un nœud.

2. Méthode selon la revendication 1, dans laquelle pour une pluralité de routes possibles vers un commutateur interfacé avec au moins un nœud, la sélection du port de sortie est réalisée en fonction des informations agrégées, ces informations comprenant le nombre de sauts, la congestion ou la pondération des liens ou nœuds sur la route permettant d'atteindre le commutateur via un port déterminé.

3. Produit programme d'ordinateur implémenté sur un support mémoire, susceptible d'être mis en œuvre au sein d'une unité de traitement informatique et comprenant des instructions pour la mise en œuvre d'une méthode selon l'une quelconque des revendications 1 à 2.

4. Commutateur dans une topologie de supercalculateur comprenant une pluralité de commutateurs (a-f) et une pluralité de nœuds (0-7), ce commutateur 15 comprenant
- une pluralité de port d'entrées et sorties, aptes à recevoir et router une donnée provenant d'un premier nœud à destination d'un deuxième nœud ;
- une liste préenregistrée de commutateurs directement 20 interfacés avec un ou plusieurs nœuds ;
- des moyens aptes à déterminer la destination de ladite donnée ;
- des moyens aptes à sélectionner puis router la donnée par un port de sortie déterminé, lorsque le commutateur est 25 directement interfacé avec le deuxième nœud via ledit port de sortie déterminé ;
- des moyens aptes à identifier un deuxième commutateur auquel est directement interfacé le deuxième nœud, par comparaison entre la destination de la donnée et la liste préenregistrée de commutateurs ;
- des moyens aptes à sélectionner puis router la donnée vers le deuxième commutateur identifié via un port de sortie, de sorte que la donnée puisse être acheminée vers ledit deuxième commutateur identifié, la sélection du port de sortie vers le commutateur identifié étant réalisée par une étape de comparaison entre le commutateur identifié et une table de routage du premier commutateur, chaque entrée de cette table comprenant
- une information permettant d'identifier un commutateur interfacé avec au moins un nœud ;
- un ensemble d'informations agrégées décrivant au moins une route par un port déterminé à destination dudit commutateur interfacé avec au moins un nœud.

5. Commutateur selon la revendication 4, comprenant des moyens aptes à sélectionner pour une pluralité de routes possibles vers un commutateur interfacé avec au moins un nœud, un port de sortie en fonction des informations agrégées, ces informations comprenant pour un port déterminé le nombre de sauts, la congestion ou la pondération des liens ou nœuds sur la route permettant d'atteindre le commutateur interfacé avec au moins un nœud.

6. Topologie d'un supercalculateur, comprenant une pluralité de commutateurs (a-f) et une pluralité de nœuds (0-7), les commutateurs étant réalisés selon l'une quelconque des revendications 4 ou 5.

## Patentansprüche

1. Verfahren zum Routen von Daten in einer Supercomputer-Topologie, die eine Vielzahl von Switches (a-f) und eine Vielzahl von Knoten (0-7) umfasst, wobei diese Daten von einem ersten Knoten kommen und an einen zweiten Knoten gerichtet sind, wobei das Verfahren die folgenden Schritte umfasst:
- Vorregistrieren einer Liste von Switches, die direkt mit einem oder mehreren Knoten zusammengeschaltet sind, in jedem der Switches der Topologie;
- Empfangen der Daten durch einen ersten Switch über einen Eingangsport;
- Bestimmen des Ziels dieser Daten durch den ersten Switch;
wenn der erste Switch mit dem zweiten Knoten über einen Ausgangsport direkt zusammengeschaltet ist:
- Auswählen und dann Routen der Daten über diesen bestimmten Ausgangsport; ansonsten
- Ermitteln des Switch, mit dem der zweite Knoten direkt zusammengeschaltet ist, durch Vergleichen zwischen dem Ziel der Daten und der vorregistrierten Liste von Switches;
- Routen der Daten zu dem ermittelten Switch über einen Ausgangsport des ersten Switch, so dass die Daten zu dem ermittelten Switch geleitet werden können, wobei das Auswählen des Ausgangsports zu dem ermittelten Switch durch einen Schritt des Vergleichens zwischen dem ermittelten Switch und einer Routingtabelle des ersten Switch ausgeführt wird, wobei jeder Eintrag dieser Tabelle umfasst:
- eine Information, die es ermöglicht, einen Switch zu ermitteln, der mit mindestens einem Knoten zusammengeschaltet ist;
- eine Gesamtheit von aggregierten Informationen, die mindestens eine Route über einen bestimmten Port zu dem mit mindestens einem Knoten zusammengeschalteten Switch beschreiben.

2. Verfahren nach Anspruch 1, bei dem bei einer Vielzahl möglicher Routen zu einem mit mindestens einem Knoten zusammengeschalteten Switch das Auswählen des Ausgangsports in Abhängigkeit von den aggregierten Informationen ausgeführt wird, wobei diese Information die Anzahl der Sprünge, die Überlastung oder die Gewichtung der Verbindungen oder Knoten auf der Route umfassen, die es ermöglicht, den Switch über einen bestimmten Port zu erreichen.

3. Computerprogrammprodukt, das auf einem Speichermedium implementiert ist, geeignet ist, in einer Datenverarbeitungseinheit eingesetzt zu werden, und Befehle zum Ausführen eines Verfahrens nach einem der Ansprüche 1 bis 2 umfasst.

4. Switch in einer Supercomputer-Topologie, die eine Vielzahl von Switches (a-f) und eine Vielzahl von Knoten (0-7) umfasst, wobei dieser Switch 15 umfasst:
- eine Vielzahl von Eingangs- und Ausgangsports, die geeignet sind, von einem ersten Knoten kommende und an einen zweiten Knoten gerichtete Daten zu empfangen und zu routen;
- eine vorregistrierte Liste von Switches, die direkt 20 mit einem oder mehreren Knoten zusammengeschaltet sind;
- Mittel, die geeignet sind, das Ziel der Daten zu bestimmen;
- Mittel, die geeignet sind, die Daten auszuwählen und dann über einen bestimmten Ausgangsport zu routen, wenn der Switch mit dem zweiten Knoten über den bestimmten Ausgangsport direkt zusammengeschaltet 25 ist;
- Mittel, die geeignet sind, durch Vergleichen zwischen dem Ziel der Daten und der vorregistrierten Liste von Switches einen zweiten Switch zu ermitteln, mit dem der zweite Knoten direkt zusammengeschaltet ist;
- Mittel, die geeignet sind, die Daten auszuwählen und dann zu dem ermittelten zweiten Switch über einen Ausgangsport zu routen, so dass die Daten zu dem ermittelten zweiten Switch geleitet werden können, wobei das Auswählen des Ausgangsports zu dem ermittelten Switch durch einen Schritt des Vergleichens zwischen dem ermittelten Switch und einer Routingtabelle des ersten Switch ausgeführt wird, wobei jeder Eintrag dieser Tabelle umfasst
- eine Information, die es ermöglicht, einen Switch zu ermitteln, der mit mindestens einem Knoten zusammengeschaltet ist;
- eine Gesamtheit von aggregierten Informationen, die mindestens eine Route über einen bestimmten Port zu dem mit mindestens einem Knoten zusammengeschalteten Switch beschreiben.

5. Switch nach Anspruch 4, umfassend Mittel, die geeignet sind, einen Ausgangsport bei einer Vielzahl möglicher Routen zu einem mit mindestens einem Knoten zusammengeschalteten Switch in Abhängigkeit von den aggregierten Informationen auszuwählen, wobei diese Informationen für einen Port die Anzahl der Sprünge, die Überlastung oder die Gewichtung der Verbindungen oder Knoten auf der Route umfassen, die es ermöglicht, den mit mindestens einem Knoten zusammengeschalteten Switch zu erreichen.

6. Topologie eines Supercomputers, die eine Vielzahl von Switches (a-f) und eine Vielzahl von Knoten (0-7) umfasst, wobei die Switches nach einem der Ansprüche 4 oder 5 ausgeführt sind.

## Claims

1. Method of routing a data item in a supercomputer topology comprising a plurality of switches (a-f) and a plurality of nodes (0-7), this data item originating from a first node and being destined for a second node, this method comprising the following steps:
- pre-recording in each of the switches of the said topology, of a list of switches which are directly interfaced with one or more nodes;
- reception of the data item by a first switch via an input port;
- determination of the destination of the said data item by the first switch;
when the first switch is directly interfaced with the second node via a determined output port
- selection and then routing of the data item by the said determined output port;
or else
- identification of the switch to which the second node is directly interfaced, by comparison between the destination of the data item and the prerecorded list of switches;
- routing of the data item to the identified switch via an output port of the first switch, so that the data item can be conveyed to the said identified switch, the selection of the output port to the identified switch being carried out by a step of comparison between the identified switch and a routing table of the first switch, each entry of this table comprising
- an information item making it possible to identify a switch interfaced with at least one node;
- a set of aggregated information items describing at least one route through a determined port destined for the said switch interfaced with at least one node.

2. Method according to Claim 1, in which for a plurality of possible routes to a switch interfaced with at least one node, the selection of the output port is carried out as a function of the aggregated information items, these information items comprising the number of jumps, the congestion or the weighting of the links or nodes on the route making it possible to reach the switch via a determined port.

3. Computer program product implemented on a memory medium, liable to be implemented within a computer processing unit and comprising instructions for the implementation of a method according to any one of Claims 1 to 2.

4. Switch in a supercomputer topology comprising a plurality of switches (a-f) and a plurality of nodes (0-7), this switch 15 comprising
- a plurality of input and output ports, able to receive and route a data item from a first node to a second node;
- a prerecorded list of switches directly 20 interfaced with one or more nodes;
- means able to determine the destination of the said data item;
- means able to select and then route the data item through a determined output port, when the switch is 25 directly interfaced with the second node via the said determined output port;
- means able to identify a second switch to which the second node is directly interfaced, by comparison between the destination of the data item and the prerecorded list of switches;
- means able to select and then route the data item to the identified second switch via an output port, so that the data item can be conveyed to the said identified second switch, the selection of the output port to the identified switch being carried out by a step of comparison between the identified switch and a routing table of the first switch, each entry of this table comprising
- an information item making it possible to identify a switch interfaced with at least one node;
- a set of aggregated information items describing at least one route through a determined port destined for the said switch interfaced with at least one node.

5. Switch according to Claim 4, comprising means able to select for a plurality of possible routes to a switch interfaced with at least one node, an output port as a function of the aggregated information items, these information items comprising for a determined port the number of jumps, the congestion or the weighting of the links or nodes on the route making it possible to reach the switch interfaced with at least one node.

6. Topology of a supercomputer, comprising a plurality of switches (a-f) and a plurality of nodes (0-7), the switches being carried out according to either one of Claims 4 or 5.
